Europäisches Patentamt

(19) European Patent Office

Office européen des brevets

(11) Numéro de publication: **0 158 558**
A1

(12) # DEMANDE DE BREVET EUROPEEN

(21) Numéro de dépôt: 85400573.3

(22) Date de dépôt: 25.03.85

(51) Int. Cl.⁴: **G 05 D 23/19**

(30) Priorité: 30.03.84 FR 8405339

(43) Date de publication de la demande:
16.10.85 Bulletin 85/42

(84) Etats contractants désignés:
AT BE DE GB IT NL SE

(71) Demandeur: Société KATIVOIS
Zirst - Chemin de Malacher
F-38240 Meylan(FR)

(72) Inventeur: Kativois, Michel
Route des Rieux
F-36330 Biviers(FR)

(74) Mandataire: Marquer, Francis et al,
CABINET MOUTARD 35, avenue Victor Hugo Résidence
Champfleury
F-78180 Voisins le Bretonneux(FR)

(54) **Procédé et disposistif pour la régulation autoadaptative par anticipation d'un processus.**

(57) Le dispositif selon l'invention sert à la régulation en température d'un élément chauffé au moyen d'une source calorifique et dont la température est mesurée au moyen d'un détecteur. Ce dispositif inclut un calculateur numérique fournissant un signal numérique de consigne programmé. Il comprend en outre un convertisseur N/A (7) transformant ledit signal numérique en un signal de consigne analogique, un soustracteur (8) qui reçoit ce signal de consigne et celui fourni par le détecteur (3), un convertisseur A/N transformant le signal d'écart $\varepsilon$ en un signal numérique, des moyens de traitement (14) permettant d'élaborer un signal de correction en fonction d'un écart d'énergie anticipé et un circuit de commande (18) de puissance de la source d'énergie répondant audit signal de correction.

L'invention s'applique notamment à la régulation d'un four.

./...

FIG.1

- 1 -

PROCEDE ET DISPOSITIF POUR LA REGULATION AUTOADAPTATIVE PAR ANTICIPATION D'UN PROCESSUS.

La présente invention concerne un procédé et un dispositif pour la régulation d'un processus et plus particulièrement, mais non exclusivement, pour la régulation en température d'un élément tel qu'un four chauffé au moyen d'une source d'énergie calorifique à puissance commandable et dont la température peut être mesurée par un détecteur tel que, par exemple, un thermocouple.

D'une manière générale, on sait qu'il a été proposé de nombreuses solutions en vue de réaliser une telle régulation. Toutefois, il s'avère que la plupart de ces solutions, en particulier les régulateurs classiques de type Proportionnel-Intégral (P.I) ou de type Proportionnel-Intégral-Dérivé (P.I.D) présentent l'inconvénient de n'être réglés que pour une valeur déterminée de la température, ce réglage devenant très approximatif pour d'autres valeurs de température.

Pour éviter cet inconvénient, on a également proposé des régulateurs autoadaptatifs qui nécessitent habituellement l'intervention de calculateurs numériques. La conduite de la régulation s'effectue alors en utilisant un modèle mathématique de l'élément à réguler qu'il convient de remettre à jour périodiquement en exploitant au mieux les mesures effectuées sur ledit élément. Il est clair que cette approche est relativement complexe et onéreuse et pose de nombreux problèmes tant théoriques que pratiques.

L'invention a donc plus particulièrement pour but de supprimer ces inconvénients. Elle propose à cet effet un procédé et un dispositif de régulation autoadaptatif basé sur un fonctionnement par anticipation qui permet, par un autoréglage permanent sur l'élément à réguler, d'optimiser les qualités de la régulation et d'obtenir une utilisation rationnelle de la notion de régulation quel que soit le point de fonctionnement recherché, sans intervention extérieure, sans recherche de constante de régulation (variable en fonction de l'élément à réguler) et sans réglage ni préréglage.

En vue de parvenir à ce résultat, dans le cas d'une régulation thermique, l'invention se base sur le fait que si l'on transmet une quantité Q d'énergie à un élément à chauffer cette énergie se décompose en deux fractions, à savoir :

1) l'énergie Q absorbée par l'élément, qui a pour expression :

$$Q = R \, (\sigma - \sigma_0)$$

2) la puissance W servant à réchauffer l'élément

$$W = K \frac{d\sigma}{dt}$$

expressions dans lesquelles R est la résistance thermique de l'élément, K est la capacité thermique de l'élément, $\sigma_0$ est la température initiale de l'élément et $\sigma$ est la température à un instant t de cet élément.

Il est donc possible de déterminer une correction de puissance à apporter en vue d'effectuer la régulation à partir de deux termes liés à ces deux phénomènes, à savoir, un terme $\alpha$ qui est proportionnel à R et un terme $\beta$ qui est

proportionnel à K. Cette correction de puissance C peut alors s'exprimer sous la forme :

$$C = \alpha\sigma + \beta\frac{d\sigma}{dt}$$

L'invention se propose d'obtenir une autoadaptatibilité de la régulation, en déterminant une correction de puissance de ce type, par anticipation, c'est-à-dire par l'étude prévisionnelle (ou prédictive) du comportement de l'élément à réguler.

A cet effet, elle se base sur le principe fondamental suivant : compte tenu de la courbe de température imposée par le programme choisi (en particulier de la pente instantanée de montée en température de la courbe définie par le programme) il est possible de prévoir ce que pourrait être, à partir d'une température $\sigma_o$ à un instant $t_o$, la température anticipée $\sigma_a$ au bout d'un temps $t_a$, si le système continuait à se comporter comme il le fait à l'instant $t_o$. Il est alors possible de déterminer un écart anticipé $E_a$ (entre la consigne imposée par le programme et la température anticipée) à partir duquel on peut en déduire une nouvelle expression théorique de la correction de puissance à apporter :

$$C_o = \alpha\,\sigma_a + \beta\frac{d\sigma_a}{dt}$$

expression dans laquelle le terme $\frac{d\sigma_a}{dt}$ est la pente de la consigne anticipée :

$$\left(\frac{\sigma_a - \sigma_o}{t_a - t_o}\right)$$

A cette expression théorique de la correction de puissance à apporter, on ajoute un terme correctif $C_1$ qui s'ajoute au terme $C_o$, à savoir :

$$C_1 = \gamma\,E_a = \gamma\,(\sigma_{ca} - \sigma_a)$$

$\sigma_{ca}$ étant égal à la température imposée par le programme au bout du temps $t_a$.

- 4 -

0158558

expression dans laquelle $\gamma$ est un facteur fonction des constantes de l'élément à réguler et est proportionnel à $\beta$. Le terme $\gamma$ est similaire à un gain car il dépend de l'écart $E_a$.

Il se pose alors le problème de la détermination du temps d'anticipation $t_a$ qui doit être nécessairement adapté aux caractéristiques de l'élément à réguler.

L'invention propose à cet effet un mode de détermination automatique de ce temps d'anticipation lors de la phase d'initialisation du régulateur, selon une séquence comprenant les étapes suivantes :

- l'envoi, sur l'élément à réguler, d'une succession de trains d'impulsions de puissance, les impulsions d'un même train, par exemple au nombre de trois, étant conformées en créneaux identiques et présentant une période et une énergie supérieures, par exemple doubles de celles du train d'impulsions précédent ;

- la détection des variations de température de l'élément à réguler (réponse du four) ;

- la comparaison des variations de température détectées avec une valeur représentative d'un écart de température de référence ;

- la détermination d'un premier temps d'anticipation $t_a$ d'après le train d'impulsions qui a provoqué un écart de température supérieur à l'écart de référence ;

- la détermination d'un deuxième temps d'anticipation $t'_a$ égal à une fraction du temps $t_a$ (par exemple $t'_a = \frac{1}{2} t_a$) ;

- le calcul de la pente de la consigne anticipée à partir des valeurs $t_a$ et $t'_a$.

- 5 -                                            0158558

On notera que pour améliorer certains facteurs du régulateur, on a été amené à déterminer d'autres éléments de temps d'anticipation liés au temps $t_a$ ainsi défini par un coefficient multiplicateur (par exemple $\frac{1}{2}$, $\frac{1}{4}$, $\frac{1}{8}$, ...).

La description qui précède permet de montrer la façon dont est régie la régulation par le procédé selon l'invention, la façon dont est déterminé le temps d'anticipation et comment ce temps d'anticipation est autoréglé pour chaque élément à réguler.

Il reste donc à définir le mode d'autoréglage des coefficients $\alpha$ et $\beta$, le coefficient $\gamma$ qui est lié à $\beta$ par un facteur déterminé empiriquement étant, de ce fait, lui-même autoréglé par la détermination de $\beta$.

Ainsi, selon une autre caractéristique de l'invention, les coefficients $\alpha$ et $\beta$ sont réglés, de manière permanente en fonction d'un écart anticipé cumulé I lié au temps $t_a$ et défini par l'intégrale :

$$I = \int_{t}^{t_a} \Delta\sigma\,dt,$$

ce réglage comprenant les étapes suivantes :

- la détermination de l'écart anticipé cumulé I,
- la comparaison de cette valeur I à une valeur de seuil $I_0$ déterminée empiriquement,
- selon que I est supérieur ou inférieur à $I_0$, l'incrémentation ou la décrémentation, soit du coefficient $\alpha$, soit du coefficient $\beta$, par une fraction de ce coefficient, par exemple de 3 %, cette incrémentation ou cette décrémentation ne se faisant que sur le coefficient $\alpha$ ou $\beta$ de plus fort poids (c'est-à-dire uniquement sur le terme prépondérant).

De préférence, le temps minimum entre deux incrémentations est fonction du temps d'anticipation $t_a$ de manière à éviter les perturbations liées aux circuits analogiques et aux circuits numériques (bruits numériques) utilisés.

Il convient de noter par ailleurs que les valeurs initiales $\alpha_o$ et $\beta_o$ des coefficients $\alpha$ et $\beta$ sont avantageusement des valeurs minimales proches de toutes les valeurs minimales trouvées expérimentalement compte tenu du fait que l'expérience montre que pour obtenir une convergence plus rapide, il est préférable d'atteindre les valeurs $\alpha$ et $\beta$ par valeurs inférieures.

Les valeurs des coefficients $\alpha$ et $\beta$ peuvent être avantageusement limitées par des butées de sécurité, de manière à maintenir ces coefficients dans une plage $\alpha_{min} - \alpha_{max}$ et $\beta_{min} - \beta_{max}$.

En outre, pour des raisons de bonne régulation, l'invention peut prévoir des moyens permettant d'inhiber l'autoréglage et l'autoadaptation quand la correction de puissance à apporter $C_o$ est nulle ou bien lorsqu'elle est maximum.

Comme précédemment mentionné, la loi de variation de température à laquelle est soumis l'élément à réguler est imposée par le programme. Bien entendu, cette loi de variation se traduit par une courbe de température correspondante pouvant comprendre une succession de segments en montée, en palier et en descente, formant, entre eux, des coudes.

Le procédé selon l'invention propose donc une solution permettant d'obtenir une réponse correcte (sans dépassement) au niveau de chaque coude, cette solution consistant à déterminer, à partir du programme, l'instant qui termine un segment de la courbe de température que l'on désire obtenir et à diminuer le temps d'anticipation à l'approche du coude suivant ledit instant. Cette diminution du temps d'anticipation peut être effectuée en le divisant par des valeurs, par exemple 2, 4, 8, croissant au fur et à mesure que l'on se rapproche dudit coude, de manière à ce que la courbe de température mesurée de l'élément à réguler suive tangentiellement la courbe de température imposée par le programme, et à ce qu'un changement d'état de programmation ne soit pas sur-compensé ou sous-compensé.

On rappelle que dans le procédé précédemment décrit, le temps d'anticipation est déterminé durant la phase d'initialisation par l'envoi, sur l'élément à réguler, d'une succession de trains d'impulsions dont les impulsions présentent des valeurs (énergie et période) croissantes d'un train à un autre.

L'invention propose en outre une méthode permettant d'améliorer cette détermination du temps d'anticipation en tenant compte des temps de réponse de l'élément à réguler. Cette méthode consiste à envoyer, en cours d'une phase initiale sur l'élément à réguler, un échelon de puissance durant un temps $t_i$ déterminé (par exemple compris entre 1 s à 12 mn) et à mesurer la température de l'élément.

Si, à la suite de cet échelon de puissance, il n'est pas détecté un écart de température significatif de l'élément à réguler, on envoie à nouveau à un échelon de puissance de valeur supérieure (par exemple de puissance double). On répète cette opération, avec, chaque fois, une puissance accrue jusqu'à ce que l'on obtienne un écart significatif de température. Bien entendu, au-delà d'un certain nombre de fois, une absence de réponse de l'élément à réguler signifie qu'il s'est produit une anomalie.

Lorsqu'un écart de température significatif est détecté, on relève le niveau d'énergie de l'échelon de puissance qui a produit cet écart, et l'on utilise ce niveau d'énergie pour déterminer l'amplitude des créneaux des trains d'impulsions servant à déterminer le temps d'anticipation $t_a$ de la façon précédemment décrite.

On notera que la valeur initiale des coefficients α et β est déterminée arbitrairement. Ces coefficients sont optimisés lors de la première montée en température de l'élément à réguler et lors du premier palier. Ils sont ensuite réajustés à chaque instant.

Bien entendu, l'invention concerne également un dispositif pour la mise en œuvre du procédé précédemment défini.

Un mode de réalisation d'un tel dispositif de régulation sera décrit ci-après, à titre d'exemple non limitatif, avec référence aux dessins annexés dans lesquels :

La figure 1 est un schéma synoptique du circuit de régulation d'un four.

La figure 2 est le schéma d'un circuit de numérisation de la température détectée du four.

La figure 3 est un organigramme simplifié illustrant le principe de la mise en régulation sur un nouveau four, avec autodétermination et autoajustement des paramètres utilisés pour la régulation.

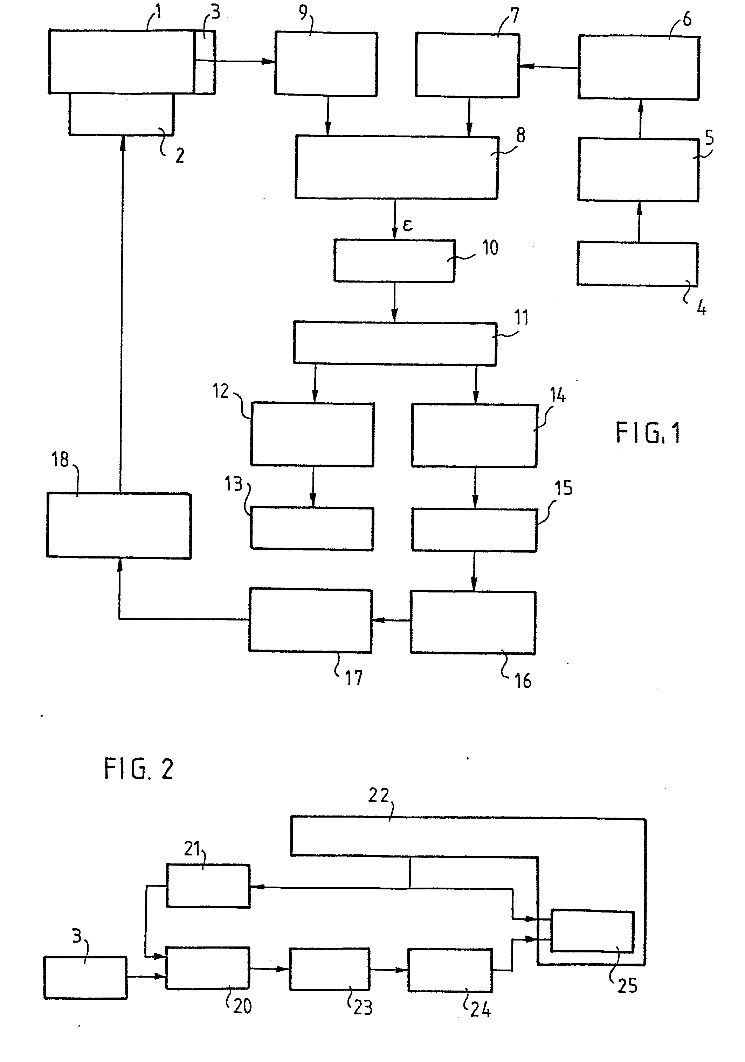

Dans l'exemple représenté sur la figure 1, le dispositif de régulation s'applique à un four 1 équipé d'un moyen de chauffage 2 à puissance commandable ainsi que d'un dispositif 3 pour la mesure de la température à l'intérieur du four 1.

Ce dispositif fait intervenir un calculateur numérique (processeur) dans lequel est introduit un programme définissant la loi de variation de la température que l'on désire obtenir à l'intérieur du four.

Ce calculateur comprend notamment des moyens (bloc 4) permettant d'afficher la courbe de variation de température en fonction du temps, que l'on désire obtenir à l'intérieur du four 1 ainsi que des moyens (bloc 5) permettant d'exécuter ce programme en fournissant, en temps réel, un signal numérique de consigne (bloc 6) transformé en un signal analogique de consigne par un convertisseur numérique analogique 7.

Ce signal analogique de consigne est transmis à un soustracteur 8 qui reçoit, par son autre entrée, le signal représentatif de la température fourni par le dispositif de mesure 3 et convenablement amplifié (amplificateur 9). Le signal d'écart ε fourni par ce soustracteur 8 est amplifié (amplificateur 10) puis transmis à un convertisseur analogique numérique qui fournit un signal numérique utilisable par le calculateur. Celui-ci comprend des moyens (bloc 12) permettant de reconstituer la température du four (température de consigne ± l'écart ε ) en vue de l'afficher (bloc 13). Il comprend également des moyens de traitement numérique de l'écart 14 en vue de la détermination de l'écart anticipé (bloc 15) et de l'élaboration de la correction à apporter (bloc 16). Le signal numérique représentatif de la correction à apporter est ensuite transmis à un convertisseur numérique/analogique 17 dont le signal de sortie commande la puissance du moyen de chauffage du four, par l'intermédiaire d'un circuit de puissance 18.

Il convient de noter que dans le but de réduire le coût du circuit de lecture de la température du four et, en particulier, de réduire les dimensions du convertisseur analogique utilisé, ce circuit peut avantageusement présenter une structure telle que celle du circuit représenté figure 2.

Selon ce circuit, le signal analogique délivré par le dispositif de mesure de température 3 équipant le four 1 est transmis à un soustracteur analogique 20 qui reçoit, sur son autre entrée, un signal analogique de consigne obtenu par conversion numérique/analogique (bloc 21) du signal numérique de consigne élaboré par le calculateur 22 à partir du programme. Le signal d'erreur analogique fourni par ce soustracteur est transmis, après amplification (bloc 23), à un convertisseur analogique/numérique 24 qui fournit, en conséquence, un signal numérique représentatif du signal d'écart.

Ce signal numérique est ensuite additionné (bloc 25), à l'intérieur du calculateur 22 au signal de consigne numérique, de sorte qu'à la sortie de l'additionneur, on obtient un signal numérique représentatif de la température mesurée du four 1.

Ce montage présente l'avantage de pouvoir utiliser un convertisseur analogique-numérique 23 de 12 bits au lieu d'un convertisseur de 16 bits qui serait nécessaire si l'on voulait directement convertir le signal fourni par le dispositif de mesure de température avec une grande précision.

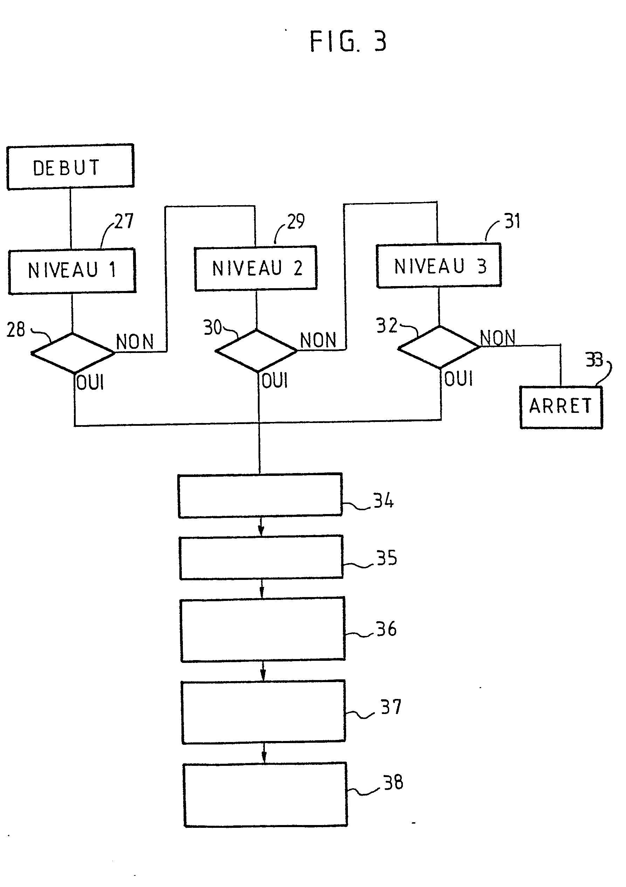

L'organigramme représenté sur la figure 3 permet d'illustrer l'ordonnancement des opérations exécutées par le calculateur lors de la mise en régulation d'un nouveau four.

Selon cet organigramme, le calculateur commande tout d'abord l'exécution d'un premier échelon de puissance (bloc 27) à un premier niveau de puissance (niveau 1). Dans le cas où, à la suite de ce palier, dans un délai déterminé, (par exemple de 3 mn), le calculateur ne détecte pas une variation significative de la température du four 1, il effectue (branchement conditionnel 28) un nouveau cycle en émettant un deuxième échelon de puissance (bloc 29) supérieur au premier. De même, si à la suite de ce deuxième palier, le calculateur ne détecte pas de variation significative de la température du four, il entame (branchement conditionnel 30) un nouveau cycle avec un échelon de puissance (bloc 31) de niveau encore plus élevé (niveau 3). L'absence de réponse du four à l'issue de ce troisième cycle provoque (branchement conditionnel 32) l'arrêt du dispositif de régulation (bloc 33) et, éventuellement, l'émission d'un signal d'alarme.

Dans le cas où le calculateur détecte une variation significative de température à la suite de l'émission de l'un de ces échelons de puissance, il procède à l'exécution (bloc 34) des trains de créneaux servant à la détermination du temps d'anticipation $t_a$. On rappelle que ce temps d'anticipation est déterminé d'après le train d'impulsions qui a provoqué un écart de température supérieur à un écart de référence. Le calculateur détermine ensuite un deuxième temps de référence $t'_a = \frac{1}{2} t_a$, puis la pente de la consigne anticipée (bloc 35).

Une fois ces opérations effectuées, le calculateur amorce le chauffage du four en suivant la consigne fournie par le programme.

Au cours de la première montée en température, il procède à la détermination entre les deux paramètres ($\alpha$ ou $\beta$) utilisés pour effectuer les corrections de puissance de celui qui est prépondérant (bloc 36), puis au cours du premier palier, il détermine le deuxième paramètre (bloc 37). Il poursuit ensuite la régulation en ajustant à chaque instant les paramètres $\alpha$ et $\beta$ (bloc 38).

Le dispositif précédemment décrit présente de nombreux avantages. Il permet d'obtenir une grande stabilité de la régulation tout en assurant de hautes performances et une bonne fiabilité. Sa programmation est simple et offre une très grande souplesse d'emploi et une multiplicité de moyens de contrôle parmi lesquels on mentionnera simplement :

- l'affichage du segment sur lequel se situe le point de fonctionnement du four à un instant donné ainsi que l'indication de la tension, du temps, avec possibilité de scrutation des segments précédents et à venir,
- l'indication de l'état de programmation et de l'état d'exécution,
- la lecture directe de la température régulée,
- la lecture par scrutation de la température de consigne,
- la possibilité de multiplexage de plusieurs régulateurs.

Revendications de brevet

1. Procédé pour la régulation en température d'un élément chauffé au moyen d'une source d'énergie calorifique à puissance commandable et dont la température peut être mesurée au moyen d'un détecteur, procédé dans lequel la puissance de la source d'énergie calorifique est commandée par une valeur de consigne établie par un programme et sur laquelle est effectuée, à chaque instant t, en vue d'obtenir la régulation, une correction de puissance,
caractérisé en ce que ladite correction de puissance comprend pour chacun des instants t, auquel correspond une température $\sigma$ :

- la détermination d'un temps d'anticipation $t_a$,

- la détermination de la température anticipée $\sigma_a$ au bout du temps d'anticipation $t_a$,

- la détermination d'une pente de consigne anticipée :

$$\frac{d\sigma_a}{dt},$$

- la détermination d'une correction de puissance à apporter de la forme :

$$C_o = \alpha \, \sigma_a + \beta \, \frac{d\sigma_a}{dt},$$

expression dans laquelle $\alpha$ est un coefficient proportionnel à la résistance thermique de l'élément et $\beta$ est un coefficient proportionnel à la capacité thermique de l'élément.

2. Procédé selon la revendication 1,
caractérisé en ce qu'il comprend la détermination d'un écart $E_a$ entre la température de consigne $\sigma_{ca}$ imposée par le programme au bout du temps $t_a$ et la température anticipée $\sigma_a$ à l'issue du temps d'anticipation $t_a$ et l'adjonction à la susdite correction de puissance d'un terme correctif $C_1$ de

la forme $C_1 = \gamma E_a$, $\gamma$ étant un facteur proportionnel à la capacité thermique de l'élément.

3. Procédé selon l'une des revendications 1 et 2, caractérisé en ce que le temps d'anticipation est déterminé lors d'une phase d'initialisation comprenant les étapes suivantes :

- l'envoi sur l'élément à réguler d'une succession de trains d'impulsions de puissance, les impulsions d'un même train étant identiques et présentant une période et une énergie supérieures à celles du train d'impulsions précédent ;

- la détection des variations de température de l'élément à réguler ;

- la comparaison des variations détectées avec une valeur représentative d'un écart de température de référence et la détermination du temps d'anticipation d'après le train d'impulsions qui a provoqué un écart de température supérieur à l'écart de référence.

4. Procédé selon la revendication 3, caractérisé en ce que l'amplitude des impulsions des trains d'impulsions servant à déterminer le temps d'anticipation $t_a$ est obtenue par la séquence suivante :

- l'application, au cours d'une phase initiale, sur l'élément à réguler, d'un échelon de puissance durant un temps $t_i$ déterminé,

- la détection d'un écart de température de l'élément,

- dans le cas où aucun écart significatif de température n'est relevé, l'application d'un nouvel échelon de puissance de valeur supérieure,

- la répétition de l'application d'un nouvel échelon de puissance de valeur supérieure tant qu'un écart significatif de température n'est pas détecté,

- lorsqu'un écart significatif de température est détecté, l'utilisation du niveau d'énergie de l'échelon de puissance qui a produit ledit écart significatif, pour déterminer l'amplitude desdites impulsions.

5. Procédé selon l'une des revendications 1 à 4, caractérisé en ce que la détermination de la pente de la consigne anticipée comprend la détermination d'un deuxième temps d'anticipation $t'_a$ égal à une fraction du temps $t_a$ et le calcul de la pente de la consigne anticipée à partir des valeurs $t_a$, $t'_a$, $\sigma_a$ et $\sigma'_a$, $\sigma'_a$ étant la température de l'élément à l'instant $t'_a$.

6. Procédé selon l'une des revendications précédentes, caractérisé en ce que les susdits coefficients $\alpha$ et $\beta$ sont réglés de façon permanente, selon la séquence d'opérations suivantes :

- la détermination d'un écart anticipé cumulé I défini par l'intégrale :

$$I = \int_t^{t_a} \Delta\sigma dt,$$

- la comparaison de cet écart anticipé cumulé I à une valeur de seuil $I_o$ déterminée expérimentalement, et

- selon que I est supérieur ou inférieur à $I_o$, l'incrémentation, soit du coefficient $\alpha$, soit du coefficient $\beta$, par une fraction de ce coefficient, cette incrémentation ou cette décrémentation ne se faisant que sur le coefficient $\alpha$ ou $\beta$ de plus fort poids.

7. Procédé selon la revendication 6,
caractérisé en ce que le temps minimum entre deux incrémentations est fonction du temps d'anticipation $t_a$.

8. Procédé selon l'une des revendications précédentes,
caractérisé en ce qu'à l'approche des coudes présents sur la courbe de variation de température imposée par le programme, le temps d'anticipation $t_a$ est diminué.

9. Procédé selon la revendication 8,
caractérisé en ce que ladite diminution du temps d'anticipation $t_a$ est obtenue en le divisant par des valeurs croissant au fur et à mesure qu'on se rapproche dudit coude.

10. Procédé selon l'une des revendications précédentes,
caractérisé en ce que les valeurs initiales $\alpha_o$ et $\beta_o$ des coefficients $\alpha$ et $\beta$ sont des valeurs minimales, de manière à atteindre les valeurs $\alpha$ et $\beta$ par valeurs inférieures.

11. Dispositif pour la régulation en température conformément au procédé selon l'une des revendications précédentes, d'un élément chauffé au moyen d'une source d'énergie calorifique à puissance commandable et dont la température est mesurée au moyen d'un détecteur, ce dispositif incluant un calculateur numérique dans lequel est introduit un programme définissant la loi de variation de la température de l'élément que l'on désire obtenir, et fournissant, en temps réel, un signal numérique de consigne, caractérisé en ce qu'il comprend :

- un convertisseur numérique-analogique (7) transformant le signal numérique de consigne en un signal analogique de consigne,

- un soustracteur (8) qui reçoit le signal analogique de consigne et un signal émanant dudit détecteur (3) et qui fournit un signal analogique d'écart,

- un convertisseur analogique-numérique transformant le signal analogique d'écart en un signal numérique d'écart,

- des moyens de traitement (14) du signal numérique d'écart permettant d'élaborer un signal de correction de puissance à apporter en fonction d'un écart d'énergie anticipé, et

- un circuit de commande (18) de la puissance de la source d'énergie répondant audit signal de correction de puissance.

12. Dispositif selon la revendication 11, caractérisé en ce qu'il comprend un circuit de lecture de la température du susdit élément, ce circuit comportant :

- un soustracteur analogique (20) recevant le signal délivré par le signal émanant du détecteur (3) et un signal analogique de consigne obtenu par conversion numérique/analogique du signal numérique de consigne élaboré par le calculateur (22),

- un convertisseur analogique/numérique, transformant le signal d'écart fourni par le soustracteur (20) en un signal numérique d'écart correspondant, et

- un additionneur numérique (25) effectuant la somme du signal numérique de consigne élaboré par le calculateur (22) et du signal numérique d'écart.

0158558

FIG. 1

FIG. 2

FIG. 3

```
        ┌──────────┐
        │  DEBUT   │
        └────┬─────┘
             │           ┌──────────────┐        ┌──────────────┐
             │    ╭27    │        ╭29   │        │        ╭31   │
        ┌────┴─────┐ ┌───┴──────┐ │ ┌───┴──────┐ │
        │ NIVEAU 1 │ │ NIVEAU 2 │ │ │ NIVEAU 3 │ │
        └────┬─────┘ └────┬─────┘ │ └────┬─────┘ │
   28╮      │      30╮    │       │ 32╮  │       │
     ◇──────┼──NON──┐ ◇───┼──NON──┘   ◇──┼──NON───┐
    OUI     │       OUI   │          OUI │        │
     │                    │                     ┌─┴────┐  33╮
                                                │ARRET │
                                                └──────┘
```

NIVEAU 1 — 27   NIVEAU 2 — 29   NIVEAU 3 — 31

28   30   32   NON   NON   NON   OUI   OUI   OUI   ARRET  33

34

35

36

37

38

Office européen
des brevets

**RAPPORT DE RECHERCHE EUROPEENNE**

**0158558**
Numero de la demande

EP 85 40 0573

## DOCUMENTS CONSIDERES COMME PERTINENTS

| Categorie | Citation du document avec indication en cas de besoin des parties pertinentes | Revendication concernee | CLASSEMENT DE LA DEMANDE (Int Cl 4) |
|---|---|---|---|
| A | EP-A-0 099 417 (SCHWEIZERISCHE ALUMINIUM) * Page 4, ligne 27 - page 7, ligne 5; figure 1 * | 1 | G 05 D 23/19 |
| A | FR-A-2 492 069 (GENERAL ELECTRIC) * Page 27, ligne 7 - page 28, ligne 23; figure 5 * | 1 | |
| A | FR-A-2 443 716 (CYBEREXACT) * Page 10, lignes 1-23 * | 1,2 | |
| A | MESURES-REGULATION AUTOMATISME, volume 39, no. 12, décembre 1974, pages 47-53, Paris, FR; A. SABATIER: "Régulation numérique directe d'un processus thermique à forte inertie" * Page 48, colonne de gauche, dernier alinéa - colonne du milieu, ligne 15; figure 2 * | 1,3 | DOMAINES TECHNIQUES RECHERCHES (Int. Cl.4) G 05 D |
| A | EP-A-0 074 868 (LA TELEMECANIQUE) * Abrégé; figure 2 * | 1,3 | |

Le présent rapport de recherche a été établi pour toutes les revendications

| Lieu de la recherche LA HAYE | Date d'achèvement de la recherche 04-06-1985 | Examinateur HELOT H.V. |
|---|---|---|